# EUROPÄISCHE PATENTSCHRIFT

(11) **EP 0 865 568 B1**
(45) Veröffentlichungstag und Bekanntmachung des Hinweises auf die Patenterteilung: **01.03.2000**
(21) Anmeldenummer: 96946015.3
(22) Anmeldetag: 25.11.1996
(51) Int. Cl.: F02B 27/02

(54) **LUFTANSAUGVORRICHTUNG FÜR EINE BRENNKRAFTMASCHINE**
AIR INLET DEVICE FOR INTERNAL COMBUSTION ENGINE
DISPOSITIF D'ASPIRATION D'AIR D'UN MOTEUR A COMBUSTION INTERNE

(30) Priorität: 07.12.1995 DE 19545746
(43) Veröffentlichungstag der Anmeldung: 23.09.1998
(73) Patentinhaber: SIEMENS AKTIENGESELLSCHAFT, 80333 München (DE)
(72) Erfinder: FISCHER, Peter, D-93049 Regensburg (DE)
(86) Internationale Anmeldenummer: DE9602266
(87) Internationale Veröffentlichungsnummer: WO9721025

(56) Entgegenhaltungen:
- EP-A- 0 467 408
- EP-A- 0 471 886
- DE-A- 4 017 049
- GB-A- 2 210 665
- JP-A- 6 280 576
- PATENT ABSTRACTS OF JAPAN vol. 16, no. 410 (M-1302), 28.August 1992 & JP 04 136420 A (MAZDA), 11.Mai 1992,

## Beschreibung

Die Erfindung betrifft eine Luftansaugvorrichtung gemäß Oberbegriff von Patentanspruch 1.

Die Ausgestaltung der Luftansaugvorrichtung für eine Brennkraftmaschine beeinflußt wesentlich die Befüllung der Zylinder mit Luft. Systeme mit Schwingungsaufladung nutzen die Strömungsdynamik der Saugrohre um die Befüllung zu optimieren. Bei niedrigen Motordrehzahlen läßt sich eine bessere Befüllung und dadurch ein größeres Drehmoment durch lang ausgebildete Saugrohre erreichen, hingegen bei hohen Motordrehzahlen müssen die Saugrohre dazu kurz ausgebildet sein.

Eine bekannte Luftansaugvorrichtung (JP-A-6280576) für eine Brennkraftmaschine mit zwei Zylinderreihen, die v-förmig zueinander angeordnet sind, hat zwei Sammler, die über einen Drosselklappen-Ansaugkanal mit der Außenluft in Verbindung stehen. Saugrohre sind vorgesehen, die gegensinnig gebogen geführt sind. Die Saugrohre haben je eine Hautöffnung hinten am Hilfskörper und eine Nebenöffnung zur Kommunikation miteinander. Eine dreiarmige Flügelklappe ist schwenkbar um eine Drehachse gelagert, die im wesentlichen senkrecht zu der Hauptströmungsrichtung der Luft in den Saugrohren ist. In einer Position geht die dreiarmige Flügelklappe die Hauptöffnung und die Nebenöffnung frei und in einer Schließposition schließt sie sowohl die Hauptöffnung als auch die Nebenöffnungen ab. Die bekannte Luftansaugvorrichtung hat den Vorteil, daß sich in der Schließposition der dreiarmigen Flügelklappe starke Turbulenzen in dem Saugrohr ausbilden.

Eine weitere bekannte Luftansaugvorrichtung (GB 2 210 665 A) für eine Brennkraftmaschine weist einen Sammler auf, der über einen Ansaugkanal mit der Außenluft in Verbindung steht. Vier Zylinder der Brennkraftmaschine sind über Saugrohre mit dem Sammler verbunden. Die Saugrohre sind in einem Abschnitt um einen zylinderförmigen Hilfskörper angeordnet und weisen Öffnungen zu diesem auf. Im Inneren des Hilfskörpers ist eine Schaltvorrichtung in Form einer Schaltwalze mit vier um den Umfang seiner Innenwand verteilten segmentförmig ausgebildeten Dichtflächen, die die gleiche Wölbung aufweisen wie die Innenwand des Hilfskörpers und die an dieser anliegen. Die Dichtflächen sind derart angeordnet, daß sie durch eine Drehbewegung um die Längsachse des Hilfskörpers in eine Endposition gebracht werden können, in der die Saugrohre über die Öffnungen miteinander kommunizieren können, und in eine Schließposition, in der die Dichtflächen die Öffnungen zu den Saugrohren abschließen.

Befinden sich die Dichtflächen in der Schließposition, so entspricht die Saugrohrlänge der für die Luftströmung wirksamen Länge. Befinden sie sich hingegen in der Endposition, bilden sich im Bereich des Hilfskörpers starke Verwirbelungen der Luft - die Strömung reißt ab. Die Saugrohre kommunizieren über den Hilfskörper und bilden so mit ihm einen Zwischensammler. Für die strömungsdynamischen Effekte aus der Sicht der Zylinder spielt dann nurmehr die Länge der Saugrohre von dem Hilfskörper bis zu den Zylindern eine Rolle.

Die Dichtflächen müssen in der Endposition die Öffnungen ganz freigeben. Somit ist der Durchmesser des Hilfskörpers so zu bemessen, daß die Innenwandflächen des Hilfskörpers zwischen den Öffnungen groß genug sind, um die Dichtflächen aufzunehmen. Bei einer Minimierung des Umfangs des Hilfskörpers müssen somit die Saugrohre gleichmäßig um den Umfang des Hilfskörpers angeordnet werden. Das Bauvolumen ist daher relativ groß und die Anordnung der Saugrohre unterliegt engen Beschränkungen.

Ein dichtes Verschließen der Öffnungen ist nur zu erreichen, wenn der Hilfskörper und die Dichtflächen eine hohe Paßgenauigkeit aufweisen, die bei Hilfskörpern, die aus Kunststoff gespritzt sind, nur mit sehr hohem Aufwand erreicht wird. Schon ein minimaler Spalt von etwa 0,1 mm zwischen den Dichtflächen und der Innenwand des Hilfskörpers führt zu starken Verwirbelungen der Luft und damit zu einer signifikanten Verringerung der wirksamen Saugrohrlänge.

Sind die Dichtflächen aus elastischem Material ausgebildet, so sind sie hohen Scherkräften bei der Verdrehung ausgesetzt, die zu einem raschen Verschleiß der Dichtflächen führen. Sie unterliegen somit einem hohen Verschleiß.

Der Antrieb für die Schaltvorrichtung muß leistungsstark ausgelegt werden, um die Reibungskräfte zwischen der Innenwand des Hilfskörpers und den Dichtflächen zu überwinden.

Daher ist es die Aufgabe der Erfindung, eine Luftansaugvorrichtung auf eine möglichst einfache Weise so auszubilden, daß sich zuverlässig über einen großen Drehzahlbereich eine gute Befüllung der Zylinder einer Brennkraftmaschine ergibt.

Das Problem wird erfindungsgemäß durch die Merkmale des Patentanspruchs 1 gelöst.
Vorteilhafte Ausgestaltungen der Erfindung sind in den Unteransprüchen gekennzeichnet.

Ein Ausführungsbeispiel der Erfindung ist im folgenden unter Bezugnahme auf die schematischen Zeichnungen näher erläutert. Es zeigen:
- Figur 1:: eine schematische Darstellung der erfindungsgemäßen Luftansaugvorrichtung,
- Figur 2:: eine Schnittbilddarstellung des Zwischensammlers längs einer Schnittlinie A A',
- Figur 3:: eine perspektivische Darstellung der Flügelklappe,

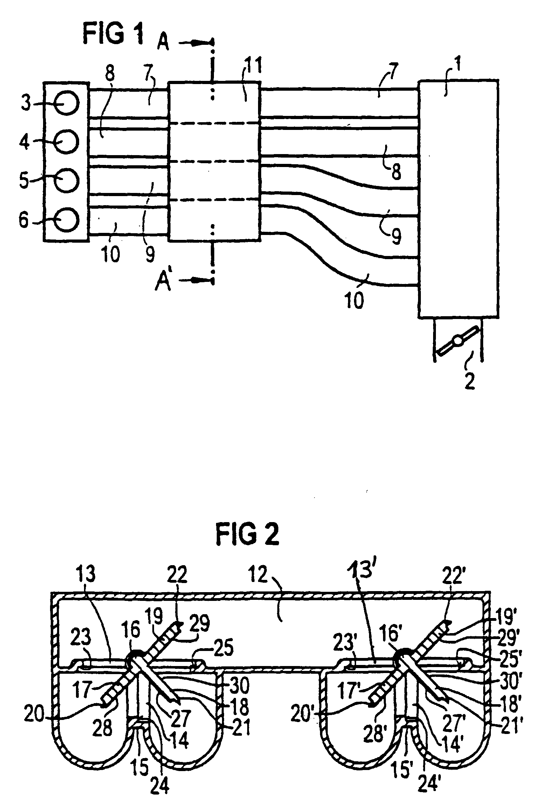

- Figur 2:: eine zweite Schnittbilddarstellung des Zwischensammlers längs einer Schnittlinie A A',

Eine Luftansaugvorrichtung weist einen Sammler 1 (Figur 1) auf, der über einen Drosselklappen-Ansaugkanal 2 mit der Außenluft in Verbindung steht. Vier Zylinder 3,4,5,6 sind über je ein Saugrohr 7,8,9,10 mit dem Sammler 1 verbunden. Die Saugrohre 7,8,9,10 sind in einer Ebene angeordnet. Sie können aber ebenso schneckenförmig ausgebildet sein. In einem Abschnitt der Saugrohre 7,8,9,10 weist die Ansaugvorrichtung einen Zwischensammler 11 auf.

In Figur 2 ist ein vertikaler Schnitt durch den Zwischensammler 11 dargestellt. Der Hilfskörper 12 hat einen quaderförmigen Querschnitt, die Abschnitte von je zwei Saugrohren 7,8;9,10 sind parallel und eng geführt an seiner Unterseite angeordnet. Der Hilfskörper 12 weist zu den Abschnitten von je zwei Saugrohren 7,8;9,10 hin eine Hauptöffnung 13,13' auf, die sich in etwa über die gesamte Länge in axialer Richtung der Abschnitte der Saugrohre 7,8;9,10 erstreckt.

Die Abschnitte von je zwei Saugrohren 7,8;9,10 weisen an ihren einander zugewandten Seiten eine Nebenöffnung 14,14' auf und sind über einen Steg 15,15', der den Abschluß der Nebenöffnung 14,14' bildet miteinander verbunden. Je eine Flügelklappe 16,16' ist in etwa in der Schnittachse zwischen der Ebene der Hauptöffnung 13,13' und der Nebenöffnung 14,14' von je zwei benachbarten Saugrohren 7,8;9,10 schwenkbar gelagert. Sie weist drei Flügel 17,18,19;17',18',19' auf, die derart ausgebildet sind, daß sie in einer Schließposition der Flügelklappe 16,16' sowohl die Hauptöffnung 13,13' als auch die Nebenöffnung 14,14' abschließen.

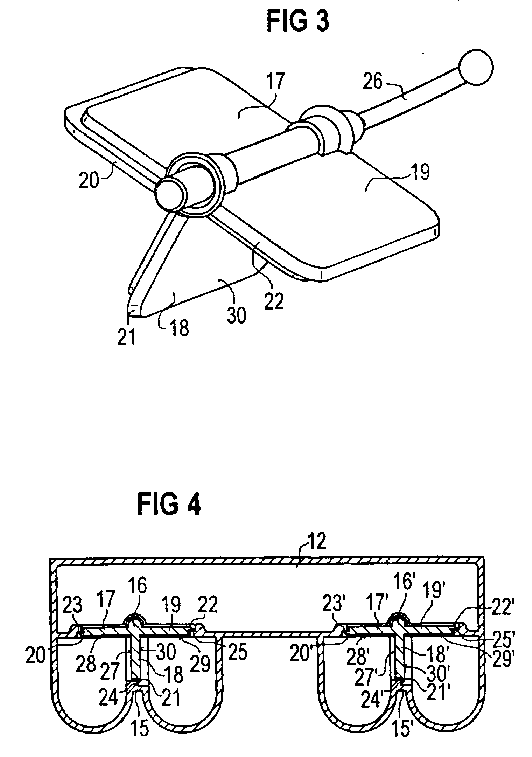

An ihrem äußeren Umfang weisen die Flügel 17,18,19, 17',18',19' (Figur 3) Dichtlippen 20,21,22;20',21',22' auf, die mit je einer Anlagefläche 23,24,25;23'24',25' auf den Berandungen der Hauptöffnung 13,13' und dem Steg 15,15' zwischen den Saugrohren 7,8;9,10 in der Schließposition anliegen. Die Dichtlippen 20,21,22,20',21',22' weisen darüber hinaus Formschrägen auf. Somit sind die Dichtlippen 20,21,22;20',21',22' bei Schwenkbewegungen der Flügelklappe 16,16' keinen Scherkräften ausgesetzt. Ihr Verschleiß ist daher minimiert. Die Flügelklappen 16,16' weisen einen Hebel 26,26' auf, der über einen einfachen Antrieb verstellt wird. Der Antrieb weist beispielsweise eine Druckdose auf, die über ein Gestänge mit den Hebeln 26,26' der Flügelklappen 16,16' verbunden ist und diese in die Schließposition und in eine Endposition verstellen kann.

In der Endposition sind die Flügel 17,18,19;17',18',19' um etwa 45° im Vergleich zur Schließposition geschwenkt. Somit bilden die Abschnitte der Saugrohre 7,8,9,10 und der Hilfskörper 12 dann ein gemeinsames Volumen. Die von dem Sammler 1 über die Saugrohre 7,8,9,10 einströmende Luft wird stark verwirbelt und breitet sich in dem gesamten Volumen aus. Dadurch bildet der Zwischensammler 11 ein Luftreservoir und wirkt wie ein zweiter Sammler 1. Die für die Befüllung der Zylinder 3,4,5,6 wirksame Länge der Saugrohre 7,8,9,10 reduziert sich damit auf die Länge des Augrohrs 7,8,9,10 zwischem dem jeweiligen Zylinder 3,4,5,6 und dem Zwischensammler 11.
In der Schließposition (Figur 4) werden die Dichtlippen 20,21,22;20',21',22' auf die Anlageflächen 23,24,25; 23',24',25' gepreßt. Das Drehmoment wird so bemessen, daß die Dichtlippen 20,21,22;20',21',22 mit den Anlageflächen 23,24, 25;23',24',25' auch bei Toleranzen bei den Anlageflächen 23, 24,25;23'24',25' und der Flügelklappe 16,16' spaltfrei anliegen. Somit ist in der Schließposition ein dichter Abschluß der Hauptöffnung 13,13' und der Nebenöffnung 14,14' gewährleistet. Die Strömung wird in den Abschnittten der Saugrohre 7,8,9,10 im Bereich des Zwischensammlers 11 dann nicht gestört, so daß die volle Länge der Saugrohre 7,8,9,10 wirksam ist.

Die benachbarten Flügel 17,18;18,19;17`,18`;18`,19`, die je ein Saugrohr 7,8,9,10 in der Schließstellung abschließen, weisen eine erste Seite 27,29;27',29' und eine benachbarte zweite Seite 28,30,28',30' auf, wobei die erste Seite 27,29;27'29', diejenige ist, auf der die Dichtlippe 21,22,21',22' in der Schließstellung mit der Anlagefläche 24,25,24',25' aufliegt. Die benachbarten Flügel 17,18;18,19;17',18';18',19' sind derart ausgebildet, daß das bei Druckunterschieden in den Saugrohren 7,8,9,10 in der Schließstellung der Flügelklappe 16,16' auftretende resultierende Drehmoment zu einem verstärkten Anpressen der Dichtlippen 20.21,22;20',21',22 an die Anlageflächen 23,24,25;23',24',25' führt. Dazu weist die erste Seite 27,29;27',29' in der Schließstellung eine kleinere Fläche auf, auf die der Luftdruck einwirkt, als die zweite Seite 28,30,28',30'. Somit muß durch den Antrieb kein Drehmoment aufgebracht werden, um ein Klappern der Flügelklappe 16,16' bei Pulsationen der Luft in den Saugrohren 7,8,9,10 zu verhindern.

Das Drehmoment zum Bewegen der Flügelklappe 16,16' aus der Endposition in die Schließposition und umgekehrt muß im wesentlichen nur die Reibung in den Lagern in denen die Flügelklappe 16,16' gelagert ist überwinden. Somit kann ein einfacher Antrieb mit geringer Leistung verwendet werden.

Durch die Anordnung aller vier Saugrohre 7,8,9,10 in einer Ebene bei diesem Ausführungsbeispiel kann eine besonders flache Bauweise der Luftansaugvorrichtung erzielt werden.

Die Abschnitte von je zwei Saugrohren 7,8;9,10 können auch gegenüberliegend angeordnet sein. Der Hilfskörper 12 befindet sich dann zwischen ihnen. So kann die Ausgestaltung der Erfindung den jeweiligen Restriktionen für den Bauraum angepaßt werden.

## Patentansprüche

1. Luftansaugvorrichtung für eine Brennkraftmaschine
- mit einem Sammler (1), der über einen Drosselklappen-Ansaugkanal (2) mit der Außenluft in Verbindung steht,
- mit mindestens vier Saugrohren (7,8,9,10), die mit dem Sammler (1) verbunden sind,
- mit einem Zwischensammler (11), der von einem Hilfskörper (12) und Abschnitten der Saugrohre (7,8,9,19) gebildet wird, die Hauptöffnungen (13,13') zur Kommunikation mit dem Hilfskörper (12) aufweisen und Nebenöffnungen (14, 14') zur Kommunikation miteinander aufweisen, und
- mit einer schwenkbar gelagerten Flügelklappe (16, 16') mit drei Flügeln (17,18,19;17'18',19'), die in einer Endposition die Hauptöffnung (13, 13') und die Nebenöffnung (14,14') freigibt und in einer Schließposition sowohl die Hauptöffnung (13, 13') als auch die Nebenöffnung (14,14') abschließt
**dadurch gekennzeichnet,**
- daß die Abschnitte von je zwei Saugrohren (7,8;9,10) parallel und eng benachbart im Bereich der Nebenöffnung (14, 14'), die zur Kommunikation der je zwei Saugrohre (7,8; 9, 10) miteinander vorgesehen ist, durch den Zwischensammler (11) geführt sind.

2. Luftansaugvorrichtung nach Anspruch 1, dadurch gekennzeichnet, daß die Abschnitte der Saugrohre (7,8,9,10) und der Hilfskörper (12) im Bereich der Hauptöffnung (13,13') und der Nebenöffnung (14, 14`) Anlageflächen (23,24,25,23', 24',25') aufweisen, und daß die Flügel (17,18,19,17',18',19') Dichtlippen (20,21,22,20',21',22') aufweisen, die in der Endposition dichtend auf den Anlageflächen (23,24,25,23',24', 25') aufliegen.

3. Luftansaugvorrichtung nach Anspruch 1, dadurch gekennzeichnet, daß die in dem Abschnitt je eines Saugrohrs (7,8,9,10) für das Abdichten der Hauptöffnung (13,13') und der Nebenöffnung (14,14') wirksamen Flächen einer ersten Seite (27, 29, 27', 29') und einer zweiten Seite (28, 30, 28', 30') geometrisch derart ausgebildet sind, daß bei Druckschwankungen in einem Saugrohr (7,8,9,10) die dichtende Wirkung der Flügelklappe (16,16') verstärkt wird.

4. Luftansaugvorrichtung nach Anspruch 1, dadurch gekennzeichnet, daß die Abschnitte der Saugrohre (7,8,9,10) in dem Zwischensammler (11) parallel und in einer Ebene angeordnet sind.

5. Luftansaugvorrichtung nach Anspruch 1, dadurch gekennzeichnet, daß die Abschnitte der Saugrohre (7,8,9,10) in dem Zwischensammler (11) parallel und paarweise gegenüberliegend angeordnet sind.

## Claims

1. An air intake system for an internal combustion engine
- comprising a collector (1) which is connected to the outside air via a throttle-controlled intake channel (2),
- comprising at least four intake pipes (7,8,9,10) which are connected to the collector (1),
- comprising an intermediate collector (11) which is formed by an auxiliary chamber (12) and sections of the intake pipes (7,8,9,19), said intake pipe sections having main openings (13,13') for communication with the auxiliary chamber (12) and secondary openings (14,14') for communication between one another, and
- comprising a swivel-mounted wing valve (16,16') with three wings (17,18,19;17',18',19'), which clears the main opening (13,13') and the secondary opening (14,14') when in the limit position, and which closes both the main opening (13,13') and the secondary opening (14,14') when in the closed position,
**characterised in that**
- the sections of two intake pipes each (7,8;9,10) run through the intermediate collector (11) in parallel and in close proximity to each other in the area of the secondary opening (14,14') provided for communication between the pipes of each pair (7,8;9,10).

2. An air intake system according to Claim 1, characterised in that the sections of the intake pipes (7,8,9,10) and the auxiliary chamber (12) have seating surfaces (23,24,25;23',24',25') in the areas of the main opening (13,13') and of the secondary opening (14,14'), and that the wings (17,18,19;17',18',19') have sealing lips (20,21,22;20',21',22') which in the limit position bear against the seating surfaces (23,24,25;23',24',25') forming a seal.

3. An air intake system according to Claim 1, characterised in that the surfaces of a first side (27,29;27',29') and of a second side (28,30;28',30'), which effect the sealing of the main opening (13,13') and of the secondary opening (14,14') in each intake pipe section (7,8,9,10), are in their geometry so designed that in the case of pressure variations in an intake pipe (7,8,9,10) the sealing effect of the wing valve (16,16') is enhanced.

4. An air intake system according to Claim 1, characterised in that the sections of the intake pipes (7,8,9,10) in the intermediate collector (11) are arranged in parallel and in one plane.

5. An air intake system according to Claim 1, characterised in that the sections of the intake pipes (7,8,9,10) in the intermediate collector (11) are arranged in parallel and in pairs on opposite sides.

## Revendications

1. Dispositif d'aspiration d'air pour un moteur à combustion interne comportant
- un accumulateur (1) qui est relié à l'air extérieur par un canal d'aspiration (2) à vanne-papillon,
- au moins quatre tubes d'aspiration (7, 8, 9, 10), qui sont reliés à l'accumulateur (1),
- un accumulateur intermédiaire (11) qui est formé par un corps auxiliaire (12) et par des portions de tubes d'aspiration (7, 8, 9, 19) qui présentent des orifices principaux (13, 13') pour communiquer avec le corps auxiliaire (12) et qui présentent des orifices secondaires (14, 14') pour communiquer entre eux, et
- une vanne-papillon (16, 16') montée pivotante et comportant trois ailerons (17, 18, 19; 17', 18', 19'), qui, dans une position de fin de course, libère l'orifice principal (13, 13') et, dans une position de fermeture, ferme aussi bien l'orifice principal (13, 13') que l'orifice secondaire (14, 14'),
caractérisé
- en ce que les portions de chaque fois deux tubes d'aspiration (7, 8; 9, 10) traversent l'accumulateur intermédiaire (11), en étant parallèles et étroitement voisines, dans la zone de l'orifice secondaire (14, 14') qui est prévue pour faire communiquer entre eux chaque fois deux tubes d'aspiration (7, 8; 9, 10).

2. Dispositif d'aspiration d'air suivant la revendication 1, caractérisé en ce que les portions des tubes d'aspiration (7, 8, 9, 19) et le corps auxiliaire (12) présentent des surfaces de contact (23, 24, 25, 23', 24', 25') dans la zone de l'orifice principal (13, 13') et de l'orifice secondaire (14, 14'), et en ce que les ailerons (17, 18, 19; 17', 18', 19') présentent des lèvres d'étanchéité (20, 21, 22, 20', 21', 22') qui s'appuient de façon étanche sur les surfaces de contact (23, 24, 25, 23', 24', 25').

3. Dispositif d'aspiration d'air suivant la revendication 1, caractérisé en ce que les surfaces d'un premier côté (27, 29, 27', 29') et celles d'un deuxième côté (28, 30, 28', 30'), agissant dans la portion de chacun des tubes d'aspiration (7, 8, 9, 10) pour rendre étanche l'orifice principal (13, 13') et l'orifice secondaire (14, 14') sont réalisées géométriquement de telle façon qu'en cas de pulsations de la pression dans un tube d'aspiration (7, 8, 9, 10), l'effet d'étanchéité de la vanne-papillon (16, 16') soit renforcé.

4. Dispositif d'aspiration d'air suivant la revendication 1, caractérisé en ce que les portions des tubes d'aspiration (7, 8, 9, 10) dans l'accumulateur intermédiaire (11) sont disposées parallèles et dans un même plan.

5. Dispositif d'aspiration d'air suivant la revendication 1, caractérisé en ce que les portions des tubes d'aspiration (7, 8, 9, 10), dans l'accumulateur intermédiaire (11), sont disposées parallèlement et en opposition par paire.
